# EUROPEAN PATENT APPLICATION

(11) **EP 4 850 531 A1**
(43) Date of publication of application: **09.12.2026**
(21) Application number: 25748647.2
(22) Date of filing: 29.01.2025
(51) Int. Cl.: A01N 45/00

(54) **RODENTICIDE COMPRISING LITHOCHOLIC ACID DERIVATIVE**

(30) Priority: 30.01.2024 JP 2024011448
(71) Applicant: Ochanomizu University, Bunkyo-ku Tokyo 112-8610 (JP); Institute of Science Tokyo, Tokyo 152-8550 (JP); Daimaru Compound Chemical Co., Ltd., Nagano-shi, Nagano, 381-1222 (JP)
(72) Inventor: TANATANI Aya, Tokyo 112-8610 (JP); KAGECHIKA Hiroyuki, Tokyo 152-8550 (JP); NAGAOKA Satoru, Nagano-shi, Nagano 381-1222 (JP)
(74) Representative: Weickmann & Weickmann PartmbB
(86) International application number: PCT/JP2025/002709
(87) International publication number: WO 2025/164643

(57) **Abstract**

It is an object of the present invention to provide a novel rodenticide. The present invention provides a rodenticide comprising a compound represented by the following general formula (I), a salt thereof, or a prodrug thereof: 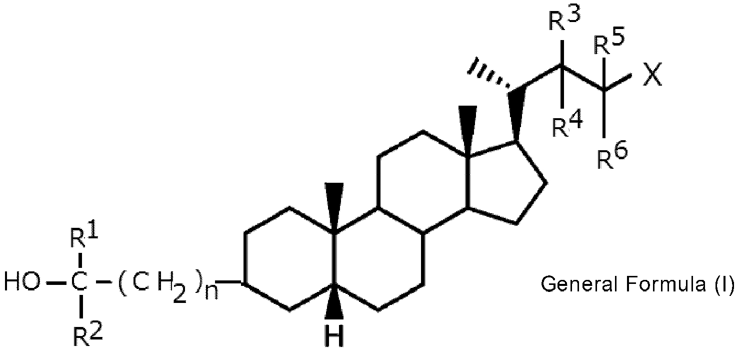 wherein R¹ and R² each independently represent a hydrogen atom or an alkyl group containing 1 to 8 carbon atoms, n represents an integer of 1 to 3, R³, R⁴, R⁵, and R⁶ each independently represent a hydrogen atom or an alkyl group containing 1 to 6 carbon atoms, and X represents COOH, -C(=O)NH-Z, -CH(OH)-(Y)ₘ-CH(OH)R₇, -NH-CO-O-R₁₀, -CO-O-R₁₀, or -NH-CO-N(R₁₁)-R₁₀, wherein Z represents a hydrogen atom, -CN, an alkyl group containing 1 to 8 carbon atoms, an alkoxyl group containing 1 to 8 carbon atoms, or a hydroxyl group, Y represents -C(R₈)(R₉)-, -C(=O)-, or -C(=CH₂)-, m represents an integer of 0 to 3, and R₇, R₈ and R₉ each independently represent a hydrogen atom or an alkyl group containing 1 to 8 carbon atoms, wherein the alkyl group containing 1 to 8 carbon atoms represented by Z, R₇, R₈ and R₉ may optionally have a substituent selected from a carboxyl group or a hydroxyl group, and R₁₀ and R₁₁ each independently represent a hydrogen atom or an alkyl group containing 1 to 8 carbon atoms and optionally having a substituent.

## Description

### Technical Field

The present invention relates to a rodenticide comprising a lithocholic acid derivative having a vitamin D activity.

### Background Art

In the case of vitamin D, a metabolically activated form thereof, 1α,25-dihydroxyvitamin D3, binds to a vitamin D receptor (VDR) and regulates the expression of specific genes. By this regulation of gene expression, vitamin D plays crucial physiological roles such as the maintaining of blood calcium levels, bone formation, immune function, and regulation of cell differentiation and proliferation. To date, a large number of VDR ligands have been developed for the purpose of developing therapeutic agents for osteoporosis, psoriasis, cancer, etc., and some of these VDR ligands have been clinically applied as pharmaceutical products.

Lithocholic acid has been found to be an endogenous ligand for VDR. Patent Document 1 describes that a lithocholic acid derivative having a hydroxyalkyl group at position 3, in which the main chain of the hydroxyalkyl group at position 3 has two or more carbon atoms, exhibits an excellent vitamin D3 agonist activity.

On the other hand, rodenticide (rat poison) is a drug used to exterminate rats. The rodenticide is usually disposed in the form of a poisoned bait, and exhibits rodenticide efficacy when the rats ingest the bait. Rodenticides include cumulative poisons and acute poisons. Cumulative poisons are continuously administered over several doses to exhibit rodenticide efficacy. Examples of the cumulative poisons may include coumatetralyl, warfarin, and difethialone. Examples of the acute poisons may include yellow phosphorus, arsenic trioxide, aluminum phosphide, zinc phosphide, norvormide, siliroside, thallium, thallium sulfate, α-naphthylthiourea, and sodium monofluoroacetate, but these drugs are highly toxic and difficult to handle.

### Prior Art Documents

### Patent Documents

Patent Document 1: International Publication WO2017/131144

### Summary of Invention

### Objects to be Solved by the Invention

It is an object of the present invention to provide a novel rodenticide.

### Means for Solving the Objects

As a result of intensive studies directed towards achieving the aforementioned object, the present inventors have found that a lithocholic acid derivative having a hydroxyalkyl group at position 3, in which the main chain of the hydroxyalkyl group at position 3 has two or more carbon atoms, is useful as a rodenticide, thereby completing the present invention.

According to the present invention, the following inventions are provided.
< 1 > A rodenticide comprising a compound represented by the following general formula (I), a salt thereof, or a prodrug thereof: 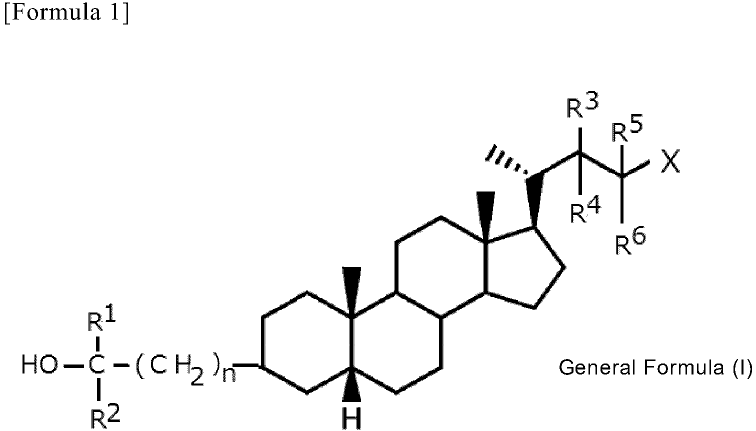 wherein
   R¹ and R² each independently represent a hydrogen atom or an alkyl group containing 1 to 8 carbon atoms,
   n represents an integer of 1 to 3,
   R³, R⁴, R⁵, and R⁶ each independently represent a hydrogen atom or an alkyl group containing 1 to 6 carbon atoms, and
   X represents COOH, -C(=O)NH-Z, -CH(OH)-(Y)ₘ-CH(OH)R₇, -NH-CO-O-R₁₀, -CO-O-R₁₀, or -NH-CO-N(R₁₁)-R₁₀, wherein Z represents a hydrogen atom, -CN, an alkyl group containing 1 to 8 carbon atoms, an alkoxyl group containing 1 to 8 carbon atoms, or a hydroxyl group, Y represents -C(R₈)(R₉)-, -C(=O)-, or -C(=CH₂)-, m represents an integer of 0 to 3, and R₇, R₈ and R₉ each independently represent a hydrogen atom or an alkyl group containing 1 to 8 carbon atoms, wherein
   the alkyl group containing 1 to 8 carbon atoms represented by Z, R₇, R₈ and R₉ may optionally have a substituent selected from a carboxyl group or a hydroxyl group, and R₁₀ and R₁₁ each independently represent a hydrogen atom or an alkyl group containing 1 to 8 carbon atoms and optionally having a substituent.
< 2 > The rodenticide according to < 1 > above, wherein X is COOH.
< 3 > The rodenticide according to < 1 > or < 2 > above, wherein R¹ and R² each represent a methyl group or an ethyl group.
< 4 > The rodenticide according to < 1 > or < 2 > above, wherein R³, R⁴, R⁵, and R⁶ each represent a hydrogen atom.
< 5 > The rodenticide according to < 1 > or < 2 > above, wherein n is 1.
< 6 > A method for killing rats, using the rodenticide according to < 1 > or < 2 > above.

According to the present invention, the following inventions are further provided.
[A] A method for killing rats, comprising administering the compound represented by the general formula (I), a salt thereof, or a prodrug thereof to rats.
[B] The compound represented by the general formula (I), a salt thereof, or a prodrug thereof, which is for use in killing rats.
[C] Use of the compound represented by the general formula (I), a salt thereof, or a prodrug thereof, for production of rodenticides.

### Advantageous Effects of Invention

The rodenticide of the present invention has an excellent rodenticide action.

### Embodiments of Carrying out the Invention

Hereinafter, the present invention will be more specifically described.

The rodenticide of the present invention comprises a compound represented by the following general formula (I), a salt thereof, or a prodrug thereof, as an active ingredient: 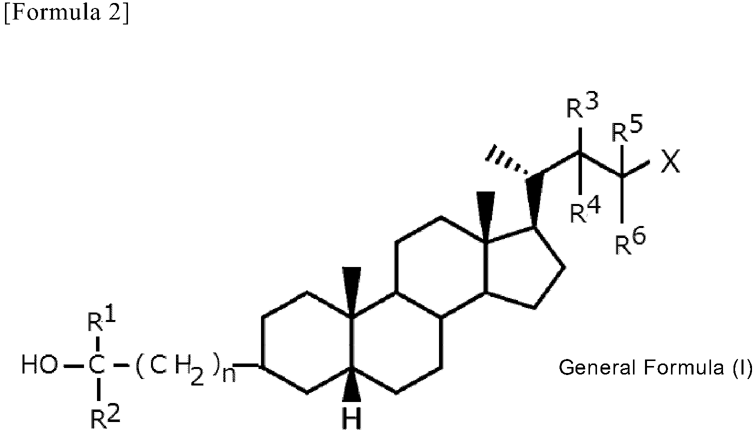 wherein
R¹ and R² each independently represent a hydrogen atom or an alkyl group containing 1 to 8 carbon atoms,
n represents an integer of 1 to 3,
R³, R⁴, R⁵, and R⁶ each independently represent a hydrogen atom or an alkyl group containing 1 to 6 carbon atoms, and
X represents COOH, -C(=O)NH-Z, -CH(OH)-(Y)ₘ-CH(OH)R₇, -NH-CO-O-R₁₀, -CO-O-R₁₀, or -NH-CO-N(R₁₁)-R₁₀, wherein Z represents a hydrogen atom, -CN, an alkyl group containing 1 to 8 carbon atoms, an alkoxyl group containing 1 to 8 carbon atoms, or a hydroxyl group, Y represents -C(R₈)(R₉)-, -C(=O)-, or -C(=CH₂)-, m represents an integer of 0 to 3, and R₇, R₈ and R₉ each independently represent a hydrogen atom or an alkyl group containing 1 to 8 carbon atoms, wherein
the alkyl group containing 1 to 8 carbon atoms represented by Z, R₇, R₈ and R₉ may optionally have a substituent selected from a carboxyl group or a hydroxyl group, and R₁₀ and R₁₁ each independently represent a hydrogen atom or an alkyl group containing 1 to 8 carbon atoms and optionally having a substituent.

The configuration of the substituent at position 3 of the steroid skeleton (i.e., the group represented by HOC(R¹)(R²)(CH₂)ₙ-) is not particularly limited, and it may be either an α-substituted form or a β-substituted form.

In the present description, the alkyl group containing 1 to 8 carbon atoms and the alkyl group containing 1 to 6 carbon atoms may be any of linear, branched, cyclic, or a combination thereof. The alkyl group containing 1 to 8 carbon atoms and the alkyl group containing 1 to 6 carbon atoms are not particularly limited, and examples thereof may include a methyl group, an ethyl group, an n-propyl group, an isopropyl group, a cyclopropylmethyl group, an n-butyl group, a sec-butyl group, a tert-butyl group, a cyclobutyl group, a cyclobutylmethyl group, a cyclopentyl group, and a cyclohexyl group.

In the present description, the alkoxy group containing 1 to 8 carbon atoms may be any of linear, branched, cyclic, or a combination thereof. The alkoxy group containing 1 to 8 carbon atoms is not particularly limited, and examples thereof may include a methoxy group, an ethoxy group, an n-propoxy group, an isopropoxy group, a cyclopropylmethyloxy group, an n-butoxy group, a sec-butoxy group, a tert-butoxy group, a cyclobutyloxy group, a cyclobutylmethoxy group, a cyclopentyloxy group, and a cyclohexyloxy group.

In the present description, the alkyl portion of the carboxyalkyl group containing 1 to 8 carbon atoms may be any of linear, branched, cyclic, or a combination thereof, and examples thereof may include divalent groups formed by removing one hydrogen atom from a methyl group, an ethyl group, an n-propyl group, an isopropyl group, a cyclopropylmethyl group, an n-butyl group, a sec-butyl group, a tert-butyl group, a cyclobutyl group, a cyclobutylmethyl group, a cyclopentyl group, and a cyclohexyl group.

R¹ and R² may be each independently identical groups or different groups, with identical groups being preferable. It is particularly preferable that both R¹ and R² are methyl groups or ethyl groups.

R³, R⁴, R⁵ and R⁶ may be each independently identical groups or different groups. It is particularly preferable that R³, R⁴, R⁵ and R⁶ are all hydrogen atoms.
n represents an integer of 1 to 3, and it is preferably 1 or 2, and more preferably 1.

X represents COOH, -C(=O)NH-Z, -CH(OH)-(Y)ₘ-CH(OH)R₇, -NH-CO-O-R₁₀, -CO-O-R₁₀, or -NH-CO-N(R₁₁)-R₁₀, and among these, COOH is preferable.

Z represents a hydrogen atom, -CN, an alkyl group containing 1 to 8 carbon atoms, an alkoxyl group containing 1 to 8 carbon atoms, or a hydroxyl group. Preferably, Z is -CN, or an alkyl group containing 1 to 8 carbon atoms and optionally having a carboxyl group. The alkyl group containing 1 to 8 carbon atoms and optionally having a carboxyl group is particularly preferably -(CH₂)₃COOH.

Y represents -C(R₈)(R₉)-, -C(=O)-, or -C(=CH₂)-, and it is preferably -C(R₈)(R₉)-, and more preferably -CH₂-.
m represents an integer of 0 to 3, and it is preferably 0 or 1.

R₇, R₈ and R₉ each independently represent a hydrogen atom or an alkyl group containing 1 to 8 carbon atoms. R₇ is preferably a hydrogen atom or a methyl group.

The alkyl group containing 1 to 8 carbon atoms, represented by R₇, R₈ and R₉, may have a substituent selected from a carboxyl group or a hydroxyl group, or may not have such a substituent. When the alkyl group has a carboxyl group, the carboxyl group is preferably a carboxyalkyl group containing 1 to 8 carbon atoms.

R₁₀ and R₁₁ each independently represent a hydrogen atom, or an alkyl group containing 1 to 8 carbon atoms and optionally having a substituent. The alkyl group containing 1 to 8 carbon atoms in the "alkyl group containing 1 to 8 carbon atoms and optionally having a substituent" may optionally have a substituent, and examples of such a substituent may include halogens (fluorine, chlorine, bromine, iodine, etc.), ethers, and aromatic rings. It is to be noted that the ether or the aromatic ring may be located in the middle of the alkyl chain.

When X is -NH-CO-O-R₁₀, R₁₀ preferably represents methyl or ethyl.

When X is -NH-CO-N(R₁₁)-R₁₀, it is preferable that R₁₀ and R₁₁ each independently represent a hydrogen atom or a methyl group.

When X is -CO-O-R₁₀, R₁₀ preferably represents a methyl group, an ethyl group, an n-propyl group, or an isopropyl group.

The compound represented by the general formula (I) may have one or two or more asymmetric carbons in some cases. Any optically active forms, stereoisomers such as diastereoisomers, any mixture of stereoisomers, racemates, etc., which are based on the asymmetric carbons, are all included in the scope of the present invention.

The compound represented by general formula (I) may also exist in the form of a salt, such as an acid addition salt or a base addition salt, and these salt forms are also included in the scope of the present invention. Examples of the acid addition salt may include: mineral salts such as hydrochloride, hydrobromide, sulfate, and nitrate; and organic acid salts such as p-toluenesulfonate, methanesulfonate, oxalate, tartrate, and maleate. Examples of the base addition salt may include: metal salts such as sodium salt, potassium salt, magnesium salt, and calcium salt; and organic amine salts such as ammonium salt, triethylamine salt, and ethanolamine salt. In addition to these salts, amino acid salts such as glycine salt are also included in the scope of the present invention.

The compound represented by the general formula (I) may also be a prodrug. After administration to a living body, the prodrug becomes a pharmaceutically active compound through the action of enzymes, metabolic hydrolysis, etc. The prodrug may be an acid derivative known to those skilled in the art, and examples thereof may include, for example, an ester produced by the reaction of the compound represented by the general formula (I) with a suitable alcohol, an amide produced by the reaction of the compound represented by the general formula (I) with a suitable amine, or a 2,4-alcohol compound as a reduced form of the carboxyl group, but is not particularly limited thereto.

The compound represented by the general formula (I), a salt thereof, and a prodrug thereof may also exist in the form of adducts (hydrates or solvates) with water or various types of solvents, and these adducts are also within the scope of the present invention. Examples of the solvents in the solvates may include methanol, ethanol, and acetonitrile, but are not particularly limited thereto. The adducts (hydrates or solvates) may be single compounds or mixtures of multiple types of compounds.

Any crystalline forms of the compound represented by the general formula (I), a salt thereof, and a prodrug thereof are also within the scope of the present invention.

Specific examples of the compound represented by the general formula (I) may include the following compounds.

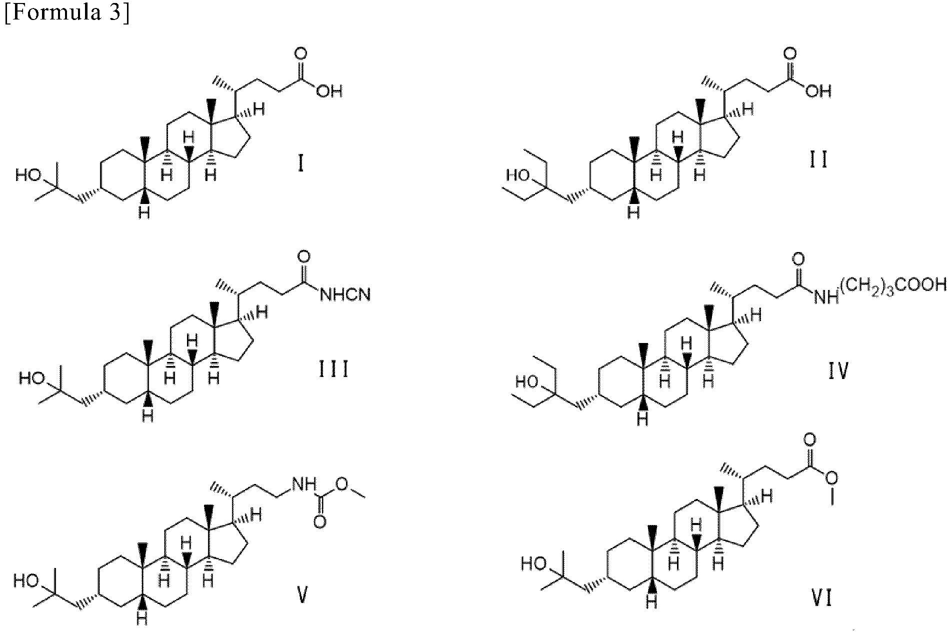

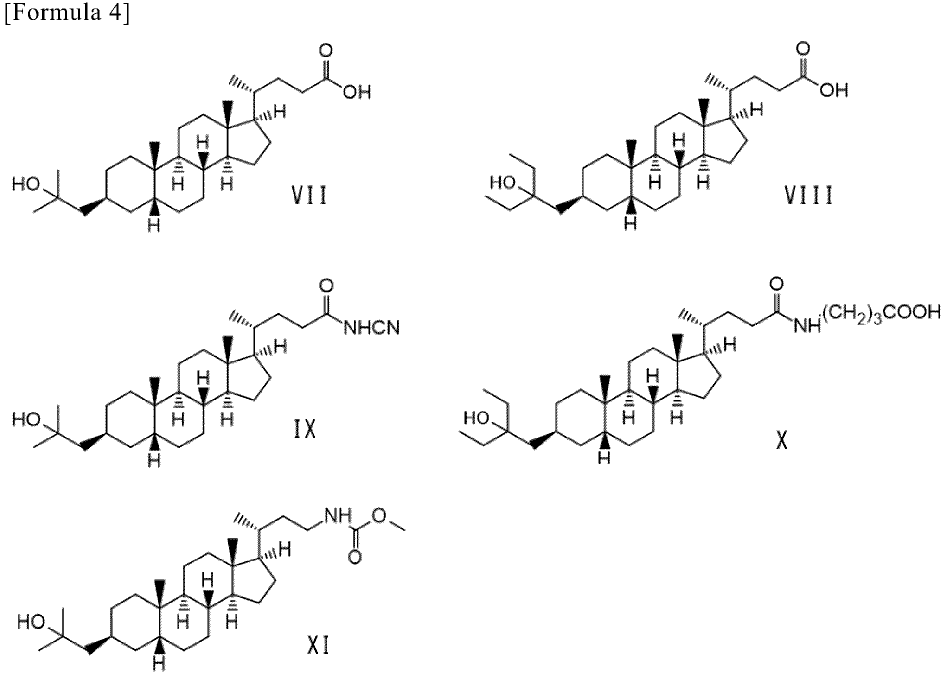

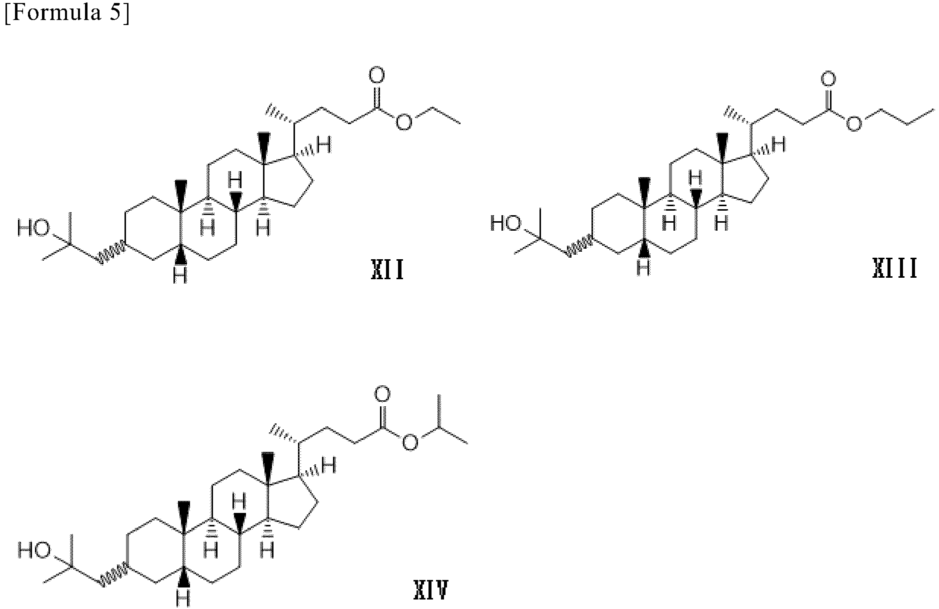

The compound represented by the general formula (I) is described in International Publication WO2017/131144, International Publication WO2021/033766, and Patent Publication (Kokai) No. 2023-111289 A, and the compound represented by the general formula (I) can be produced by the methods described in the aforementioned publications.

Since the compound represented by the general formula (I) has an excellent rodenticide action, it can be used as an active ingredient for rodenticides. According to the present invention, a method for killing rats, using the rodenticide of the present invention, is provided.

The fact that the compound represented by the general formula (I) has a rodenticide action can be verified by administering the compound represented by the general formula (I) to rats and then evaluating the survival rate of the rats.

The rodenticide of the present invention comprises the compound represented by the general formula (I) as an active ingredient.

The rodenticide of the present invention can take any form suitable for extermination of harmful rodents, and can be provided, for example, in the form of a formulation suitable for oral administration. The rodenticide of the present invention can take the form of a concentrated liquid, powder, grain, gel, or paste, or the form of extruded baits such as pellets or blocks.

In addition to the compound represented by the general formula (I) serving as an active ingredient, the rodenticide of the present invention may also comprise one or more excipients. Examples of the excipients that can be used herein may include mineral oil, carbohydrates such as dextrin, inorganic substances such as clay, other organic solvents such as glycol and DMSO, water, grain raw materials such as barley, wheat, corn, or rice, and binders such as paraffin.

The compound represented by the general formula (I) can be mixed with an excipient(s) according to ordinary methods (e.g., convection, dispersion, shear, etc.).

The rodenticide of the present invention can be used for extermination of rodents (in particular, harmful rodents). Examples of such rodents may include mice/rats, such as mice, rats, field voles, brown rats, black rats, and house mice. Specific examples may include black rats (*Rattus rattus*), brown rats (*Rattus norvegicus*), house mice (*Mus musculus*), and field voles (*Microtus montebelli*).

The rodenticide of the present invention can be used to exterminate rodents in home environments, rural environments, business environments, urban environments, public food service or hospitality establishments, or agricultural processing industries.

The rodenticide of the present invention may also be used as a preventative measure in areas that need to be protected from rodent attacks. The rodenticide of the present invention may be placed or fixed in a bait box suitable for extermination of rodents.

The applied dose of the compound represented by the general formula (I) used can be appropriately determined depending on a rodent as a target, and the dose of the present compound is preferably 1 mg/kg to 500 mg/kg, preferably 2 mg/kg to 100 mg/kg, and more preferably 5 mg/kg to 50 mg/kg, depending on the target rodent.

The present invention will be specifically described in the following examples. However, the present invention is not limited by the examples.

### Examples

### < Synthesis of Compound 2 >

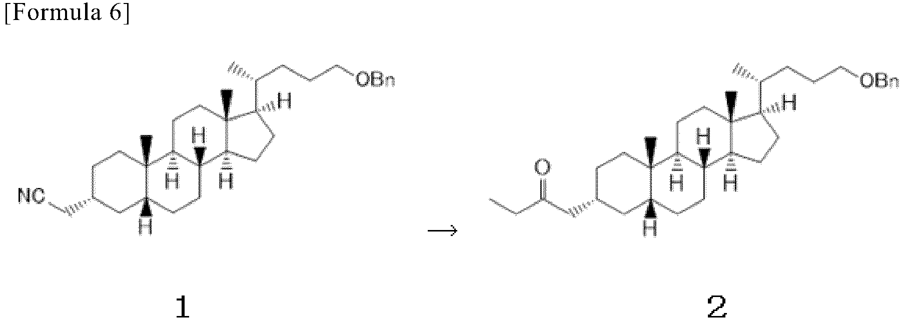

Under an argon atmosphere, a diethyl ether (2.5 mL) solution of Compound 1 (14.2 mg, 0.030 mmol) was cooled to 0°C, and 0.20 mL (0.10 mmol) of 0.5 M ethyllithium (benzene/cyclohexane solution) was then added thereto. The obtained mixture was stirred at 0°C for 2 hours and 30 minutes. Thereafter, 2 M hydrochloric acid was added to the reaction solution, and the obtained mixture was then stirred at room temperature for 30 minutes. Thereafter, 28% ammonia water was added to the reaction solution, and the obtained mixture was then extracted with ethyl acetate. The organic layer was washed with a normal saline. After drying over anhydrous magnesium sulfate, the solvent was removed by distillation to obtain a crude product. The crude product was purified by flash column chromatography (AcOEt/n-hexane = 1/12) to obtain a colorless, oily Compound 2 (4.3 mg, 28%).
¹H NMR (400 MHz, CDCl₃) δ 7.34 (d, J = 4.1 Hz, 4H), 7.31-7.27 (m, 1H), 4.50 (s, 2H), 3.44 (t, J = 6.6 Hz, 2H), 2.40(q, J = 7.3 Hz, 2H), 2.30 (d, J = 6.9 Hz, 2H), 1.95 (d, J = 11.9 Hz, 1H), 1.88-1.60 (m, 5H), 1.60-0.86 (m, 23 H), 1.04 (t, J = 7.3 Hz, 3H), 0.92 (s, 3 H), 0.91 (d, J = 5.0 Hz, 3H), 0.63 (s, 3 H).

### < Synthesis of Compound 3 >

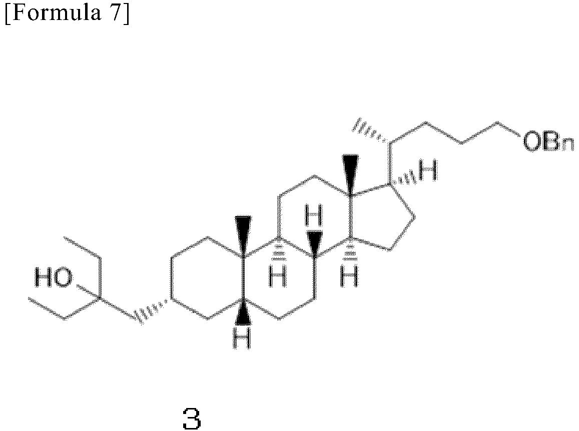

Under an argon atmosphere, a diethyl ether (5.0 mL) solution of Compound 2 (9.8 mg, 0.019 mmol) was cooled to -69°C, and 0.25 mL (0.13 mmol) of 0.5 M ethyllithium (benzene/cyclohexane solution) was then added thereto. The obtained mixture was stirred at-69°C for 4 hours and 15 minutes. Thereafter, a saturated ammonium chloride aqueous solution was added to the reaction solution, and after bringing it to room temperature, water was added, and the obtained solution was extracted with ethyl acetate. The organic layer was washed with a normal saline. After drying over anhydrous magnesium sulfate, the solvent was removed by distillation to obtain a crude product. The crude product was purified by flash column chromatography (AcOEt/n-hexane = 1/10) to obtain a colorless, oily Compound 3 (3.1 mg, 30%).
¹H NMR (400 MHz, CDCl₃) δ 7.35 (d, J = 4.1 Hz, 4H), 7.31-7.28 (m, 1H), 4.51 (s, 2H), 3.44 (t, J = 6.9 Hz, 2H), 1.96 (d, J = 11.4 Hz, 1H), 1.93-1.60 (m, 5H), 1.60-0.79 (m, 26 H), 1.48 (q, J = 7.3 Hz, 4H), 0.92 (d, J = 5.0 Hz, 3H), 0.91 (s, 3H), 0.86 (t, J = 7.6 Hz, 6H), 0.64 (s, 3H).

### < Synthesis of Compound 4 >

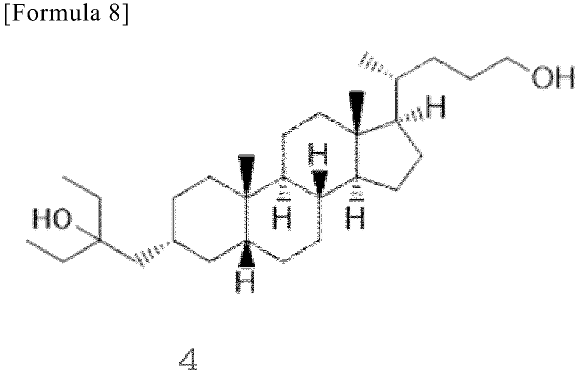

To a methanol (2.5 mL) solution of Compound 3 (6.3 mg, 0.012 mmol), palladium hydroxide (3.5 mg) was added, followed by hydrogen replacement, and the mixture was stirred at room temperature for 2 hours and 30 minutes. The reaction solution was filtered through Celite, and the solvent was removed by distillation to obtain a white solid, Compound 4 (6.1 mg, quant.).
¹H NMR (400 MHz, CDCl₃) δ 3.66-3.58 (m, 2H), 1.95 (dd, J = 11.5, 3.2 Hz, 1H), 1.88-0.79 (m, 31H), 1.74 (d, J =13.3 Hz, 1H), 1.47 (q, J = 7.6 Hz, 4H), 0.92 (d, J = 6.9 Hz, 3H), 0.91 (s, 3H), 0.85 (t, J = 7.6 Hz, 6H), 0.64 (s, 3H).

### < Synthesis of Compound II >

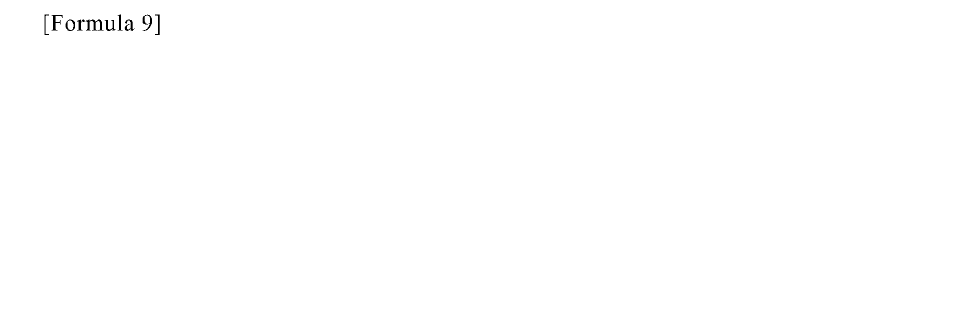

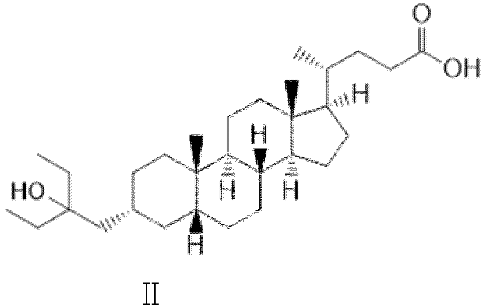

Chromium(VI) oxide (265.6 mg) was dissolved in in water (0.77 mL), and concentrated sulfuric acid (0.23 mL) was added thereto under ice cooling to prepare a Jones reagent. The Jones reagent (0.1 mL) was added to a solution of Compound 4 (5.8 mg, 0.013 mmol) in anhydrous acetone (2.0 mL), and the obtained solution was then stirred at room temperature for 40 minutes. Thereafter, water was added to the reaction solution, and after removing the acetone by distillation, extraction was performed with diethyl ether. The organic layer was washed with normal saline. After drying over anhydrous magnesium sulfate, the solvent was removed by distillation to obtain a crude product. The crude product was purified by GPC (CHCl3) to obtain a white solid, Compound II (4.0 mg, 67%).
¹H NMR (400 MHz, CDCl₃) δ 2.44-2.36 (m, 1H), 2.30-2.22 (m, 1H) 1.94 (d, J = 11.0 Hz, 1H), 1.83-0.95 (m, 29H), 1.74 (d, J = 13.3 Hz, 1H), 1.47 (q, J = 7.3 Hz, 4H), 0.92 (d, J = 6.4 Hz, 3H), 0.91 (s, 3H), 0.85 (t, J = 7.3 Hz, 6H), 0.64 (s, 3H); HRMS calcd for C₃₀H₅₂NaO₃ (M + Na)⁺ 483.3809, found 483.3815.

### < Synthesis of Compound 5 >

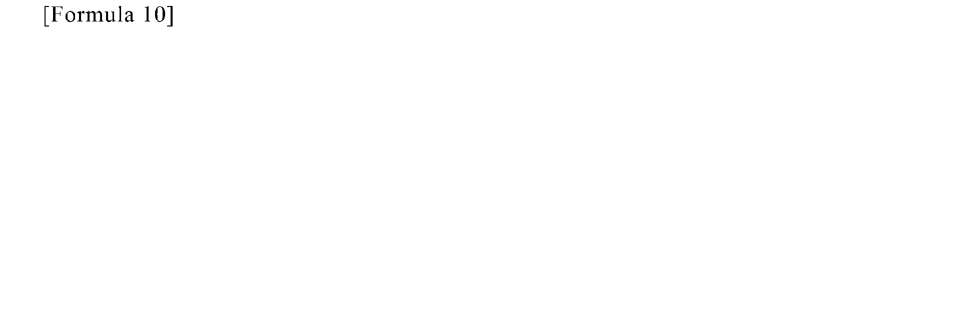

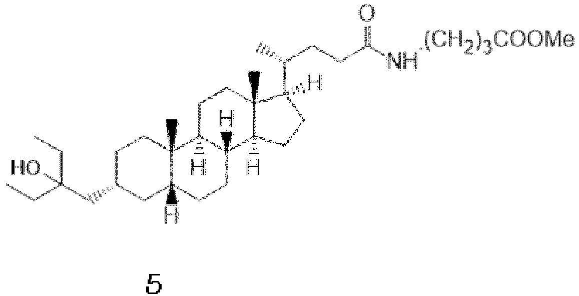

Under an argon atmosphere, Compound II (300.0 mg, 0.651 mmol), methyl 4-aminobutyrate hydrochloride (200.0 mg, 1.302 mmol), and N-methylmorpholine (197.8 mg, 1.956 mmol) were dissolved in dichloromethane, and 1-ethyl-3-(3-dimethylaminopropyl)carbodiimide hydrochloride (250.0 mg, 1.304 mmol) was then added to the obtained solution. The obtained mixture was stirred at room temperature for 7 hours. Thereafter, the reaction mixture was diluted with chloroform, and the obtained solution was then washed with 1 M hydrochloric acid and a saturated normal saline. After drying over anhydrous magnesium sulfate, the solvent was removed by distillation to obtain a crude product. The crude product was purified by silica gel column chromatography (AcOEt/n-hexane = 1/1) to obtain a colorless, oily Compound 5 (274.7 mg, 75%). ¹H NMR (600 MHz, CDCl₃) δ 5.72 (s, 1H), 3.69 (s, 3H), 3.30 (dd, J = 12.7, 6.6 Hz, 2H), 2.38 (t, J = 7.1 Hz, 2H), 2.28-2.20 (m, 1H), 2.10-2.02 (m, 1H) 1.98-1.90 (m, 1H), 1.90-0.95 (m, 35H), 0.91 (d, J = 6.6 Hz, 3H), 0.91 (s, 3H), 0.85 (t, J = 7.5 Hz, 6H), 0.63 (s, 3H).

### < Synthesis of Compound IV >

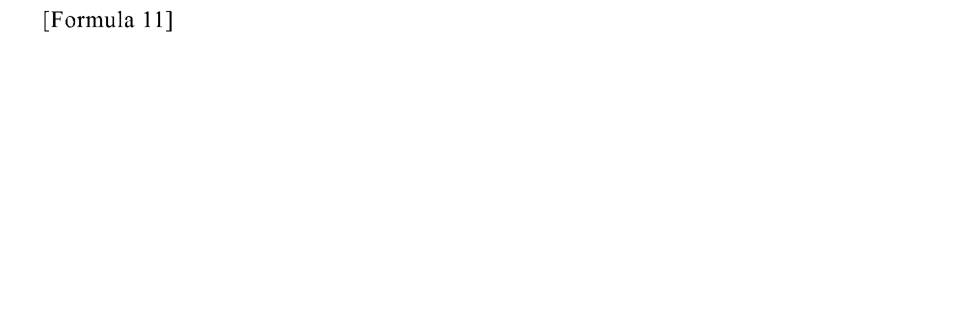

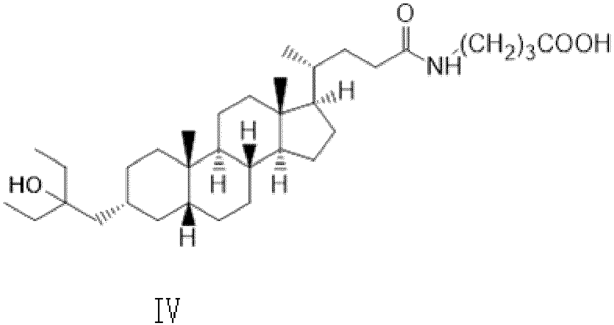

Compound 5 (250.0 mg, 0.447 mmol) was dissolved in ethanol (10 mL), and a 15% (w/w) potassium hydroxide aqueous solution (2.0 mL) was then added thereto. The obtained mixture was stirred at room temperature overnight. Thereafter, the solvent was removed by distillation, and 1 M hydrochloric acid was then added to the residue. The obtained mixture was filtrated and was then washed with water. The resultant was dissolved in diethyl ether, and was then washed with water and a saturated normal saline. After drying over anhydrous magnesium sulfate, the solvent was removed by distillation to obtain a white solid, Compound IV (207.6 mg, 85%).
¹H NMR (600 MHz, CDCl₃) δ 5.89 (m, 2H), 3.34 (dd, J = 12.5, 6.2 Hz, 2H), 2.40 (t, J = 6.9 Hz, 2H), 2.32-2.22 (m, 1H), 2.14-2.04 (m, 1H) 1.98-1.90 (m, 1H), 1.90-0.95 (m, 35H), 0.92 (d, J = 6.5 Hz, 3H), 0.91 (s, 3H), 0.85 (t, J = 7.5 Hz, 6H), 0.63 (s, 3H); HRMS calcd for C₃₄H₅₉NNaO₄ (M + Na)⁺ 568.4333, found 568.4336.

### < Synthesis of Compound XII >

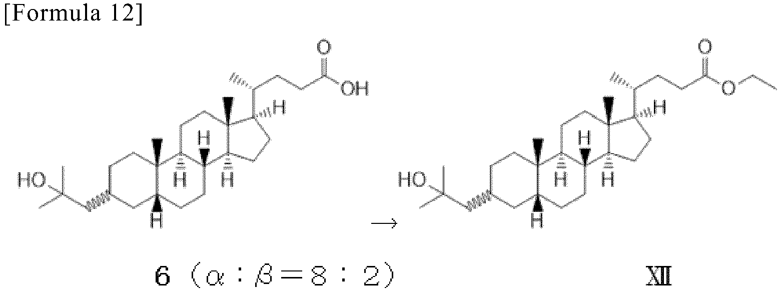

Under an argon atmosphere, Compound 6 (200.0 mg, 0.462 mmol) was dissolved in ethanol (10 mL), and acetyl chloride (0.033 mL, 0.462 mmol) was then added thereto. The obtained mixture was stirred at room temperature for 2 hours. Then, acetyl chloride (0.30 mL, 4.204 mmol) was further added to the reaction mixture, followed by stirring overnight. Thereafter, water was added to the reaction solution, the thus obtained mixture was then extracted with ethyl acetate, and the organic layer was then washed with a normal saline. After drying over anhydrous magnesium sulfate, the solvent was removed by distillation to obtain a crude product. The crude product was purified by silica gel column chromatography (AcOEt/n-hexane = 10/1, 5/1) to obtain a colorless, oily Compound XII (α : β = 80 : 20) (179.4 mg, 84%).
¹H NMR (600 MHz, CDCl₃) δ 4.12 (dd, J = 14.0, 6.9 Hz, 2H), 2.38-2.30 (m, 1H), 2.24-2.14 (m, 1H), 2.05-0.93 (m, 30H), 1.25 (t, J = 7.1 Hz, 3H), 1.24-1.21 (m, 6H), 0.93-0.89 (m, 6H), 0.64 (s, 3H); HRMS calcd for C₃₀H₅₂NaO₃ (M + Na)⁺ 483.3810, found 483.3809.

### < Synthesis of Compound XIII >

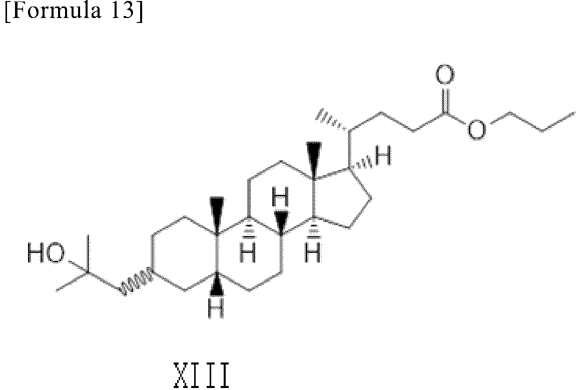

Under an argon atmosphere, Compound 6 (200.0 mg, 0.462 mmol) was dissolved in 1-propanol (10 mL), and acetyl chloride (0.33 mL, 4.624 mmol) was then added thereto. The obtained mixture was stirred at room temperature overnight. Thereafter, water was added to the reaction solution, the thus obtained solution was then extracted with ethyl acetate, and the organic layer was then washed with a normal saline. After drying over anhydrous magnesium sulfate, the solvent was removed by distillation to obtain a crude product. The crude product was purified by silica gel column chromatography (AcOEt/n-hexane = 10/1, 5/1) to obtain colorless, oily Compound XIII (α : β = 80 : 20) (190.3 mg, 87%).
¹H NMR (600 MHz, CDCl₃) δ 4.02 (t, J = 6.8 Hz, 2H), 2.38-2.30 (m, 1H), 2.26-2.16 (m, 1H), 2.08-0.86 (m, 30H), 1.69-1.61 (m, 2H), 1.25-1.20 (m, 6H), 0.95 (t, J = 7.3 Hz, 3H), 0.93-0.89 (m, 6H), 0.64 (s, 3H); HRMS calcd for C₃₁H₅₄NaO₃ (M + Na)⁺ 497.3966, found 497.3965.

### < Synthesis of Compound XIV >

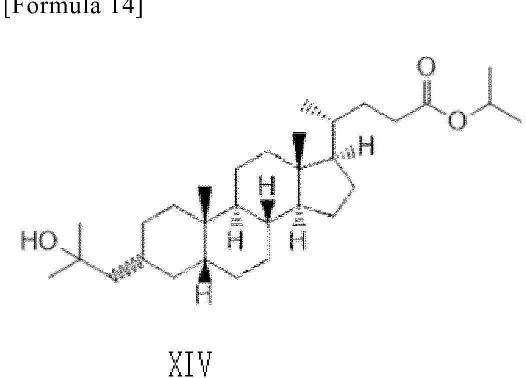

Under an argon atmosphere, Compound 6 (200.0 mg, 0.462 mmol) was dissolved in isopropanol (10 mL), and acetyl chloride (0.033 mL, 0.462 mmol) was then added thereto. The obtained mixture was stirred at room temperature for 2 hours. Then, acetyl chloride (0.30 mL, 4.204 mmol) was further added to the reaction mixture, followed by stirring overnight. Thereafter, water was added to the reaction solution, the thus obtained mixture was then extracted with ethyl acetate, and the organic layer was then washed with a normal saline. After drying over anhydrous magnesium sulfate, the solvent was removed by distillation to obtain a crude product. The crude product was purified by silica gel column chromatography (AcOEt/n-hexane = 10/1, 5/1) to obtain a colorless, oily Compound XIV (α : β = 80 : 20) (117.9 mg, 54%).
¹H NMR (600 MHz, CDCl₃) δ 5.00 (quin, J = 6.3 Hz, 1H), 2.35-2.25 (m, 1H), 2.21-2.14 (m, 1H), 2.06-0.70 (m, 30H), 1.57 (s, 6H), 1.25-1.19 (m, 6H), 0.93-0.84 (m, 6H), 0.64 (s, 3H); HRMS calcd for C₃₁H₅₄NaO₃ (M + Na)⁺ 497.3968, found 497.3965.

### < Test Example >

Male rats (Slc: Wistar/ST, 7 weeks old) were forced to be orally administered with a single dose of either Cholecalciferol (150 mg/kg, 100 mg/kg, or 50 mg/kg) or Compounds I to IV, VI, VII, and XII to XIV (50 mg/kg, 25 mg/kg, 20 mg/kg, or 10 mg/kg) in each group of N = 3. In addition, as a solvent control, the rats were also orally administered with a single dose of corn oil (10 mL/kg) in each group of N = 2. Observations were conducted for 14 days after the administration.

As a result, the number of individuals that died or were in dying conditions during the observation period was 3/3 in the 150 mg/kg Cholecalciferol group, 1/3 in the 100 mg/kg Cholecalciferol group, 0/3 in the 50 mg/kg Cholecalciferol group, and 0/2 in the corn oil group. In addition, the results of Compounds I to IV, VI, VII, and XII to XIV are shown in the table below.

**[Table 1]**

| Compound | I | II | III | IV | VI | VII | XII | XIII | XIV |
|---|---|---|---|---|---|---|---|---|---|
| 50 mg/kg | 3 | - | - | - | 3 | 3 | 3 | 3 | 1 |
| 25 mg/kg | 3 | 3 | - | 3 | 3 | 1 | 3 | 1 | 0 |
| 20 mg/kg | - | - | 3 | - | - | - | - | - | - |
| 10 mg/kg | 3 | 3 | 2 | 3 | 0 | 0 | 0 | 0 | - |

| | | | | | | | | | |
|---|---|---|---|---|---|---|---|---|---|
| * N = 3 in each group * -: Not implemented | | | | | | | | | |

## Claims

1. A rodenticide comprising a compound represented by the following general formula (I), a salt thereof, or a prodrug thereof: 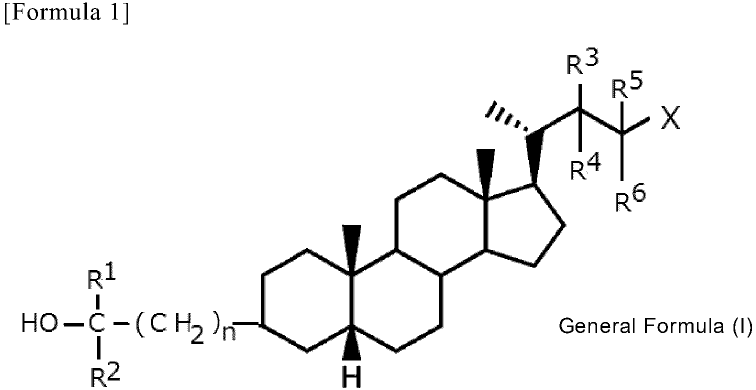 wherein
R¹ and R² each independently represent a hydrogen atom or an alkyl group containing 1 to 8 carbon atoms,
n represents an integer of 1 to 3,
R³, R⁴, R⁵, and R⁶ each independently represent a hydrogen atom or an alkyl group containing 1 to 6 carbon atoms, and
X represents COOH, -C(=O)NH-Z, -CH(OH)-(Y)ₘ-CH(OH)R₇, -NH-CO-O-R₁₀, -CO-O-R₁₀, or -NH-CO-N(R₁₁)-R₁₀, wherein Z represents a hydrogen atom, -CN, an alkyl group containing 1 to 8 carbon atoms, an alkoxyl group containing 1 to 8 carbon atoms, or a hydroxyl group, Y represents -C(R₈)(R₉)-, -C(=O)-, or -C(=CH₂)-, m represents an integer of 0 to 3, and R₇, R₈ and R₉ each independently represent a hydrogen atom or an alkyl group containing 1 to 8 carbon atoms, wherein
the alkyl group containing 1 to 8 carbon atoms represented by Z, R₇, R₈ and R₉ may optionally have a substituent selected from a carboxyl group or a hydroxyl group, and R₁₀ and R₁₁ each independently represent a hydrogen atom or an alkyl group containing 1 to 8 carbon atoms and optionally having a substituent.

2. The rodenticide according to claim 1, wherein X is COOH.

3. The rodenticide according to claim 1 or 2, wherein R¹ and R² each represent a methyl group or an ethyl group.

4. The rodenticide according to claim 1 or 2, wherein R³, R⁴, R⁵, and R⁶ each represent a hydrogen atom.

5. The rodenticide according to claim 1 or 2, wherein n is 1.

6. A method for killing rats, using the rodenticide according to claim 1 or 2.
